# EUROPEAN PATENT SPECIFICATION

(11) **EP 0 309 058 B1**
(45) Date of publication and mention of the grant of the patent: **16.06.1993**
(21) Application number: 88202059.7
(22) Date of filing: 21.09.1988
(51) Int. Cl.: B62B 3/00

(54) **Transportation trolley**
Transportwagen
Chariot de transport

(30) Priority: 25.09.1987 NL 8702291
(43) Date of publication of application: 29.03.1989
(73) Proprietor: Coöperatieve Vereniging "Verenigde Bloemenveilingen Aalsmeer" (V.B.A.)B.A., NL-1431 GB Aalsmeer (NL)
(72) Inventor: Hoogenboom, Bernardus Aloysius Maria, NL-2435 XR Zevenhoven (NL)
(74) Representative: de Vries, Johannes Hendrik Fokke

(56) References cited:
- DE-A- 1 755 014
- DE-U- 8 522 276
- FR-A- 1 581 331
- FR-A- 2 315 239
- US-A- 1 820 466
- US-A- 3 698 733
- US-A- 3 856 320
- US-A- 3 953 047
- US-A- 4 588 096
- US-A- 4 687 215

## Description

The invention relates to a transportation trolley for flowers, plants or the like according to the preamble of claim 1.

Transportation trolleys of said type are applied in great numbers at flower auctions and the like. In this case said transportation trolleys are used for the transport of flowers, plants or the like through the auction building. Moreover said transportation trolleys are used for transporting the flowers or the like from the nursery towards the auction and from the auction towards the customers. The transportation trolleys used at this moment and of said type can roughly be divided into two catagories: the transportation trolley according to Dutch model and the transportation trolley according to Danish model. The transportation trolley according to Dutch model is characterized by a shape that is extremely auction minded. However this Dutch transportation trolley is less convenient for transportation in trucks, for the dimensions of this transportation trolley do not sufficiently match the usually standardized dimensions of said trucks. Moreover these transportation trolleys according to Dutch model are rather low, such that although guaranteeing a good accessibility of the uppermost trays in a truck a large amount of the loading capacity, namely near to the ceiling, is not used.

In contrast thereto the transportation trolley according to Danish model is extremely fitted to be applied at the transport in high trucks, for its dimensions better match the inner dimensions of the loading space of said trucks. This known transportation trolley however is less suitable to be used in the auction building, for a number of provisions are missing. One can mention a coupling system for forming a train of transportation trolleys and a coupling system for moving the transportation trolleys by means of a chain conveyor. Further the height of the transportation trolley according to Danish model is less convenient for users.

It can be concluded that the use of said known transportation trolleys among others can lead to standardization problems, a waste of transportation volume (especially in trucks), sorting problems (in relation to the difficulty of removing trays from the transportation trolley), problems in relation to moving the transportation trolleys (especially in the auction building), problems with respect to handling (parts of) the transportation trolleys (among others the large space occupied by transportation trolleys that temporarily are not used), as well as a number of logistic problems.

An example of a trolley having trays which can be slid in between and out of between partitions, is shown in US-A-4.588.096. Said known trolley comprises a knock-down tray rack with support members telescopingly fitted in the partitions

Therefore it is an object of the invention to provide a transportation trolley of the type mentioned before solving said problems in an easy, but nevertheless effective way.

As a result the transportation trolley according to the invention is characterized as set forth in the characterizing portion of claim 1.

The possible shift in height of the partitions enables an adaptation of the transportation trolley to the respective changing circumstances. With respect thereto by the application in the auction building as well as during the use in trucks the most effective configuration of the transportation trolley can be chosen. The fact that the trays are releasably connected with the partitions leads to a more flexible stream of flowers, plants or the like through the auction building.

During use in the auction building a relative low height of the partitions can be chosen, such that also the uppermost trays can be reached. When the transportation trolley has to be transported in a truck it is possible to increase the height of the partitions such that, possibly through using additional trays, an optimal use of the loading space of the truck can be obtained.

It is possible, that the partitions can be released from the chassis. Like this it is possible to stack chassis' of transportation trolleys which are temporarily out of use in a space saving way.

If according to a handy embodiment the transportation trolley comprises a combined towing hook-towpin assembly for mutually coupling a number of transportation trolleys or coupling the transportation trolley to a chain conveyor or the like, respectively, the handling of said transportation trolley in the auction building is extremely simple and accessable for a drastic automatization.

Hereafter the invention will be elucidated by means of the drawing in which a number of embodiments of the transportation trolley according to the invention are illustrated.
Fig. 1 shows a perspective view of a first embodiment of a stackable trolley according to the invention;
Fig. 2 shows a perspective view of a second embodiment of a stackable trolley according to the invention, and
Fig. 3 shows a detail of a trolley. trolley according to the invention in perspective view.

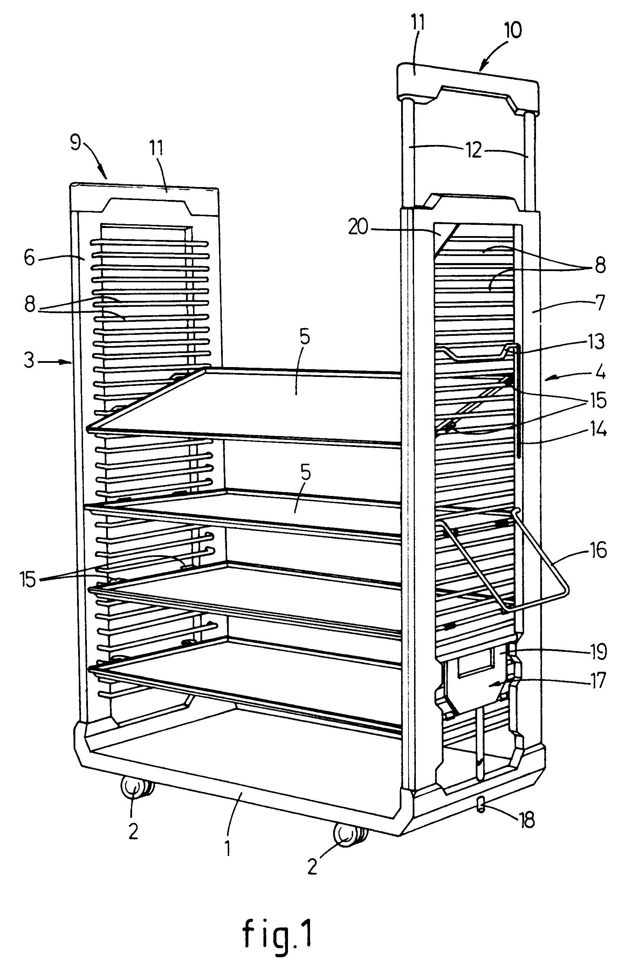

The transportation trolley shown in fig. 1 comprises a rectangular chassis 1 with wheels 2. Generally there will be applied two swivel castors and two stationary wheels for providing the transportation trolley with good tracking qualities and a good stability, also if said transportation trolley is coupled with corresponding transportation trolleys to form a train.

At the frontal and rearward side of the transportation trolley on top of the chassis 1 partitions 3 and 4 are positioned that extend vertically. Between the partitions 3 and 4 are extending a number of trays 5, that are releasably connected with the partitions 3 and 4. Onto said trays 5 flowers, plants or the like can be supported.

The partitions 3 and 4 each comprise two sections, namely a first section 6, 7 with supporting members 8 for the trays 5 and a second section 9 or 10, respectively, that can be shifted in height with respect to said first section 6, 7. As can be seen especially at the second section 10, each second section comprises a loose upper margin 11 that is shiftable towards different positions relative to said first section 6 or 7, respectively, by means of guiding rods 12 attached to said second section 11 and sliding in recesses in said first section 6, 7. Further in fig. 1 a cliplike member 13 is visible that is connected with the guiding rods 12 of each second section 9, 10 through grooves 14 in each first section 6,7. This cliplike member functions as a handle for moving each second section 9, 10 and as a locking device for locking the second section 9, 10 in a desired position relative to the first section 6 or 7, respectively.

Because each second section 9, 10 can be varied in height relative to the respective first section 6, 7 in the way shown in fig. 1 the partitions as it were have a variable height. In the illustrated embodiment the second sections 9 and 10 afford the possibility to wrap the transportation trolley upto a greater height with a protective film, such that also plants or the like supported by the uppermost tray 5 having a large height are effectively protected. Thus it is for example possible to increase the height of the partitions 3 and 4 which in the position shown in fig. 1 for partition 3 comprises 2 m, upto 2,4 m.

The trays 5 comprise at their ends cooperating with the partitions 3 and 4, hook-like elements 15 that can grip behind the supporting members 8. As a result the connections between the trays 5 and the partitions 3 and 4 not only are suited to accommodate pressure forces but tensile forces too. As a result it is avoided that the trays 5 fall down between the partitions when a tensile force is exerted onto one of said partitions.

If, as can be seen clearly in fig. 1, each tray 5 comprises at its ends two distanced hook-like elements 15 it is possible that these hook-like elements 15 grip behind supporting member 8 different among themselves giving the tray an inclined position. Partitions 3 and 4 are releasable from the chassis 1, whereafter these partitions can be stacked, such as the chassis and the trays.

For handling purposes the transportation trolley comprises a handle 16, while further a combined towing hook-towpin assembly 17 is provided for. This towing hook-towpin assembly 17 comprises a towpin 18 that in a corresponding lower position of the assembly 17 can contact a chain conveyor for moving the transportation trolley as well as a towing hook 19, that in a lower position thereof can be used for mutually coupling a number of transporation trolleys to form a train. The embodiment of the towing hook-towpin assembly 17 is such that during the application of one of the parts (towpin 18 or towing hook 19) the other part is locked. Further the towing hook 19 is embodied such, that it can be fixedly connected to a preceding transporation trolley while being pivotably connected with the respective transportation trolley itself. As a result better tracking properties of coupled transportation trolleys are obtained.

Finally fig. 1 shows an identification label 20 that can be released only by means of a special key. This identification label 20 is meant for the management of the transporation trolleys.

For standardization purposes it is advantageous if the shown transportation trolley has a length of 127 cm and a width of 60 cm. Then the loading area of the trays is 120 cm long by 60 cm wide.

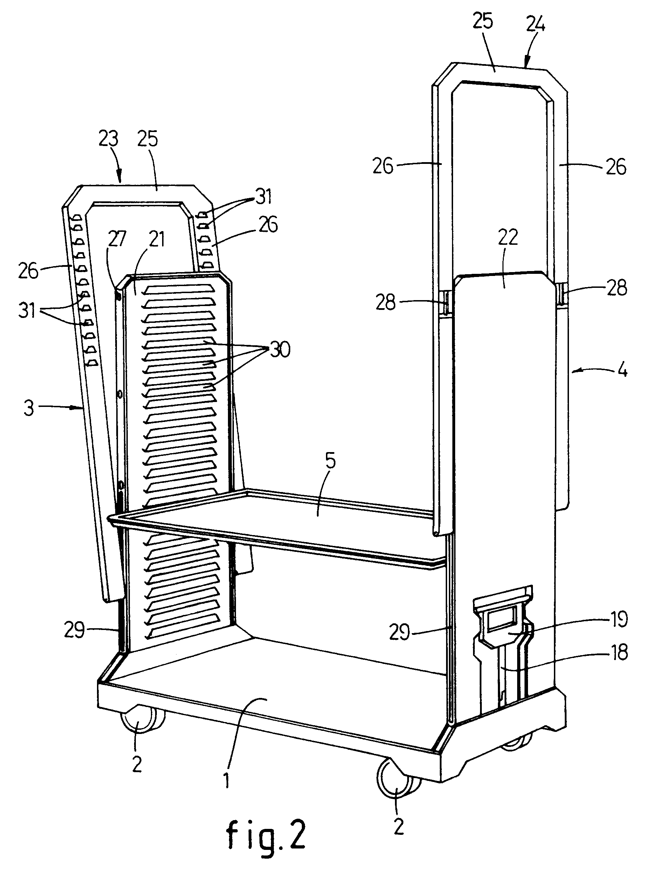

In the embodiment of the transportation trolley according to fig. 2 one can again see the chassis 1, the wheels 2, partitions 3 and 4 and a tray 5.

In this transportation trolley the partitions 3 and 4 comprise each a first section 21 and 22 that, in contrast to the embodiment according to fig. 1, is shaped in a solid way, as well as a second section 23, 24. Each second section 23, 24 comprises an upper margin 25 and two side margins 26 connected with the upper margin 25.

Each second section 23, 24 is shiftable relative to the corresponding first section 21 or 22, respectively, wherein said shift essentially takes place in the plane of the corresponding first section 21, 22. For enabling such a shift the longitudinal sides of each first section 21, 22 each comprise a number of recesses 27, whereas the side margins 26 are provided with cams (not visible in the figure), that can be positioned in the respective desired recesses 27 in the longitudinal sides of the corresponding first section 21 or 22, respectively. Like this the second section 23, 24 can be locked in a desired position relative to the corresponding first section 21, 22. For changing the position of the second section relative to the first section the cams can be disengaged from the recesses 27 in the longitudinal sides of the respective first section 21, 22 by means of a control device 28.

For promoting the correct shift of each second section relative to the respective first section each side margin 26 comprises near to its lowermost end a pin (again not visible in fig. 2), that is positioned pivotable and shiftable in a groove 29 in the corresponding longitudinal side of the respective first section 21, 22. Apart from said pin each side marging 26 only needs one cam that can be controlled by means of a control device 28 for moving the second section 23, 24 relative to the respective first section 21, 22.

As appears further from fig. 2 the first sections 21 and 22 again comprise supporting members 30. However the side margins 26 of the second sections 23 and 24 too are provided with supporting members 31, wherein the shape of the trays 5 and the supporting members 30 and 31 is such, that the trays 5, that are supported by the supporting members 30 of a first section 21, 22 do not contact the corresponding supporting members 31 of the side margins 26 of the corresponding second section 23 of 24. This brings about the advantage that the second section can be shifted relative to the corresponding first sections without having to remove the trays 5 positioned between the partitions. In the upwardly shifted position of the second sections, as indicated by the second section 24 in fig. 2, it is possible to apply trays 5 at a larger height. Like this these trays 5 are supported by the supporting members 31 of the side margins 26 of the second sections 23 and 24.

Again the transportation trolley according to fig. 2 comprises a towing hook-towpin assembly, comprising a towing hook 19 and a towpin 18. Further a, non-illustrated, identification label can be applied. Finally at this transportion trolley the partitions too can be released from the chassis, whereafter the chassis, the partitions and the trays are stackable among themselves.

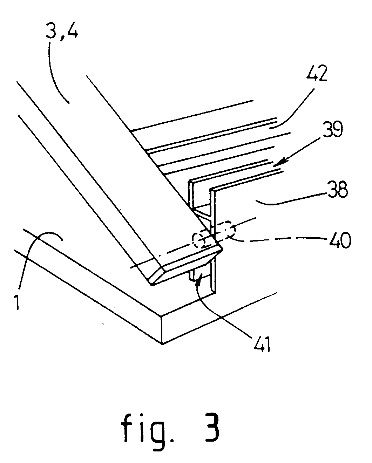

The partitions 3 and 4 of the transportation trolley illustrated in fig. 1 or 2 may be pivotable from the shown vertical position towards a position in which they extend nearly parallel to the chassis 1. In fig. 3 a constructive solution therefore is presented.

It is visible here that the partitions 3 and 4 comprise a lower partition section 38 stationary connected to the chassis, in which partition section at the upper side a U shaped receiving groove 39 is provided. At the lower end of the partitions 3, 4 pins 40 are provided that are journalled pivotable and shiftable in corresponding recesses 41 of the stationary partition section 38. In the vertical position of the partitions 3, 4 a transversal beam 42 thereof is received in the receiving groove 39 of the stationary partition section 38, wherein the lower ends of the partition sections 3, 4 possibly rest on the top face of the chassis 1. If the partitions have to be pivoted towards a position, in which they extend almost parallel to the chassis 1 they first describe a vertical upwardly directed motion during which the pins 40 shift upwardly in the recesses 41. When thereafter the transversal beams 42 are freed from the corresponding receiving grooves 39 the partitions are rotated about the pins 40 towards their horizontal position. Hereby these partitions 3, 4 will come to a rest on the chassis 1.

Of course the trays 5 have to be removed previous to downwardly pivoting the partitions. After the partitions have been pivoted downwardly it is possible to stack another transporation trolley on top of the upper ends of the stationary partition sections 38, which transportion trolley then rests with its chassis on these stationary partition sections 38.

The invention is not limited to the embodiments described before, but can be varied widely within the scope of the invention as defined by the claims. It is noted, that it is for example possible to apply one of the illustrated properties of one of the embodiments in one of the other embodiments, which are illustrated before.

## Claims

1. Transportation trolley for flowers, plants or the like, comprising a chassis (1) with at least two swivel castors (2), two vertical partitions (3,4) extending at two opposite sides of said chassis and a number of horizontal trays (5) which can be slid horizontally in between and out of between said partitions and which are releasably connected therewith, **characterized** in that each partition (3,4) comprises a first section (6,7;21,22) with supporting members (8,30) for the trays (5) and a second section (9,10;23,24) that can be shifted in height with respect to said first section.

2. Transportation trolley according to claim 1, **characterized** in that the second section (9,10) comprises a loose upper margin (11) of the first section (6,7), said upper margin being shiftable towards different positions relative to said first section by means of guiding rods (12) attached to said second section and sliding in recesses in said first section.

3. Transportation trolley according to claim 2, **characterized** in that the loose upper margin (11) can be fixed relative to the first section by means of a locking device (13) connected to the guiding rods and attachable to the first section.

4. Transportation trolley according to claim 1, **characterized** in that each second section (23,24) forms a loose upper margin (25) as well as, connected therewith, two loose side margins (26) of the corresponding first section (21,22), whereby the loose side margins are shiftable within the plane of said first section and along the corresponding longitudinal sides thereof for moving the second section relative to the first section.

5. Transportation trolley according to claim 4, **characterized** in that each of the longitudinal sides of the first section (21,22) comprises a number of recesses (27), whereas the loose side margins (26), that are part of the second section (23,24), are provided with cams that are positionable in the respective desired recesses in the longitudinal sides of the first section for maintaining the second section in the desired position relative to said first section.

6. Transportation trolley according to claim 5, **characterized** in that by means of a control device (28), such as a handle or the like, the cams can be brought into or out of contact with the recesses (27) in the longitudinal sides of the first section.

7. Transportation trolley according to claim 5 or 6, **characterized** in that each loose side margin (26) that is part of said second section (23,24) comprises near its lowermost end an inwardly directed pin that is positioned pivotable and shiftable in a groove (29) in the corresponding longitudinal side of the first section (21,22), whereas each loose side margin further comprises only one cam positioned at some distance above each pin.

8. Transportation trolley according to one of the claims 4-7, **characterized** in that the loose side margins (26) too comprise supporting members (31) for the trays (5), the shape of the trays and supporting members being such that the trays that are supported by the supporting members (30) of the first section (21,22) do not contact the supporting members (31) of the loose side margins (26).

9. Transportation trolley according to one of the claims 1-8, **characterized** in that the partitions (3,4;43,44) are releasable from said chassis (1).

10. Transportation trolley according to one of the claims 1-9, **characterized** in that the trays (5) comprise at their ends cooperating with the partitions hook-like elements (15) that can grip behind the supporting members (8) of the partitions or loose side margins.

11. Transportation trolley according to claim 10, **characterized** in that each tray comprises at each of said ends two distanced hook-like elements (15) that can grip behind supporting members (8) different among themselves.

12. Transportation trolley according to one of the claims 1-11, **characterized** in that it comprises a combined towing hook-towpin assembly (17) for mutually coupling a number of transportation trolleys or coupling the transportation trolley to a chain conveyor or the like, respectively.

13. Transportation trolley according to claim 12, **characterized** in that during application of one of the parts (18,19) of the towing hook-tow pin assembly (17) the other part is locked.

14. Transportation trolley according to one of the claims 1-13, **characterized** in that it can be positioned onto a special auction chassis (35) whereby the wheels (2) of the chassis (1) of the transportation trolley are free from the ground.

15. Transportation trolley according to claim 14, **characterized** in that the auction chassis (35) comprises a U-shaped frame (37) with one open side, through which open side the transportation trolley is positionable onto the auction chassis.

16. Transportation trolley according to claim 15, **characterized** in that the open side constitutes a longitudinal side.

17. Transportation trolley according to one of the claims 14-16, **characterized** in that the auction chassis (35) comprises a lifting device that in an upper position lifts a transportation trolley from the ground positioned onto said auction chassis and that in a lower position allows positioning the transportation trolley onto the auction chassis or removing it therefrom.

## Patentansprüche

1. Transportwagen für Blumen, Pflanzen oder dergleichen, mit einem Fahrgestell (1) mit wenigstens zwei Schwenkrollen (2) , zwei an zwei gegenüberliegenden Seiten des Fahrgestells angeordneten vertikalen Wänden (3, 4) und einer Anzahl horizontaler Einlegeböden (5), die horizontal zwischen den Wänden und aus diesen heraus gleitend verschiebbar sind und lösbar mit den Wänden verbunden sind, dadurch gekennzeichnet, daß jede Wand (3, 4) einen ersten Abschnitt (6, 7; 21, 22) mit Stützelementen (8; 30) für die Einlegeböden (5) und einen bezüglich des ersten Abschnitts höhenverstellbaren zweiten Abschnitt (9, 10; 23, 24) aufweist.

2. Transportwagen nach Anspruch 1, dadurch gekennzeichnet, daß der zweite Abschnitt (9, 10) einen beweglichen oberen Rand (11) des ersten Abschnitts (6, 7) umfaßt, wobei dieser obere Rand mittels Führungsstangen (12), die am zweiten Abschnitt angebracht sind und in Ausnehmungen des ersten Abschnitts gleiten, in verschiedene Stellungen bezüglich des ersten Abschnitts verschiebbar ist.

3. Transportwagen nach Anspruch 2, dadurch gekennzeichnet, daß der bewegliche obere Rand (11) mittels einer Verriegelungseinrichtung (13), die mit den Führungsstangen verbunden ist und am ersten Abschnitt arretiert werden kann, bezüglich des ersten Abschnitts festgelegt werden kann.

4. Transportwagen nach Anspruch 1, dadurch gekennzeichnet, daß die zweiten Abschnitte (23, 24) jeweils einen beweglichen oberen Rand (25) und zwei mit diesem verbundene bewegliche Seitenränder (26) des zugehörigen ersten Abschnitts (21, 22) bilden, wobei die beweglichen Seitenränder in der Ebene des ersten Abschnitts und entlang dessen jeweiliger Längsseiten verschiebbar sind, um den zweiten Abschnitt bezüglich des ersten Abschnitts zu bewegen.

5. Transportwagen nach Anspruch 4, dadurch gekennzeichnet, daß die Längsseiten des ersten Abschnitts (21, 22) jeweils eine Anzahl von Vertiefungen (27) aufweisen, während die beweglichen Seitenränder (26), die zum zweiten Abschnitt (23, 24) gehören, jeweils mit Nocken versehen sind, die in den zugeordneten gewünschten Vertiefungen in den Längsseiten des ersten Abschnitts eingerückt werden können, um den zweiten Abschnitt in der gewünschten Stellung bezüglich des ersten Abschnitts zu halten.

6. Transportwagen nach Anspruch 5, dadurch gekennzeichnet, daß die Nocken mittels einer Steuereinrichtung (28), etwa einem Griff oder dergleichen, in oder außer Eingriff mit den Vertiefungen (27) in den Längsseiten des ersten Abschnitts gebracht werden können.

7. Transportwagen nach Anspruch 5 oder 6, dadurch gekennzeichnet, daß die beweglichen Seitenränder (26), die zum zweiten Abschnitt (23, 24) gehören, nahe an ihren unteren Enden jeweils einen nach innen gerichteten Zapfen aufweisen, der schwenkbar und in einer in der zugehörigen Längsseite des ersten Abschnitts (21, 22) befindlichen Nut (29) verschiebbar angeordnet ist, während die beweglichen Seitenränder ferner jeweils nur einen, mit Abstand oberhalb des zugehörigen Zapfens angeordneten Nocken aufweisen.

8. Transportwagen nach einem der Ansprüche 4 bis 7, dadurch gekennzeichnet, daß auch die beweglichen Seitenränder (26) Stützelemente (31) für die Einlegeböden (5) aufweisen, wobei die Gestalt der Einlegeböden und der Stützelemente solcherart ist, daß die Einlegeböden, die von den Stützelementen (30) des ersten Abschnitts (21, 22) getragen werden, nicht mit den Stützelementen (31) der beweglichen Seitenränder (26) in Berührung stehen.

9. Transportwagen nach einem der Ansprüche 1 bis 8, dadurch gekennzeichnet, daß die Wände (3, 4; 43, 44) vom Fahrgestell (1) abnehmbar sind.

10. Transportwagen nach einem der Ansprüche 1 bis 9, dadurch gekennzeichnet, daß die Einlegeböden (5) an ihren mit den Wänden zusammenwirkenden Enden hakenförmige Glieder (15) aufweisen, welche die Stützelemente (8) der Wände oder der beweglichen Seitenränder hintergreifen können.

11. Transportwagen nach Anspruch 10, dadurch gekennzeichnet, daß jeder Einlegeboden an den genannten Enden zwei beabstandete hakenförmige Glieder (15) aufweist, welche voneinander verschiedene Stützelemente (8) hintergreifen können.

12. Transportwagen nach einem der Ansprüche 1 bis 11, dadurch gekennzeichnet, daß er eine kombinierte Schlepphaken-Schleppzapfen-Anordnung (17) aufweist, um eine Reihe von Transportwagen aneinanderzuhängen bzw. um den Transportwagen an eine Kettenfördereinrichtung oder dergleichen zu kuppeln.

13. Transportwagen nach Anspruch 12, dadurch gekennzeichnet, daß während des Einsatzes eines der Teile (18, 19) der Schlepphaken-Schleppzapfen-Anordnung (17) das andere Teil blockiert ist.

14. Transportwagen nach einem der Ansprüche 1 bis 13, dadurch gekennzeichnet, daß er auf ein besonderes Auktionsfahrgestell (35) gestellt werden kann, wodurch die Räder (2) des Transportwagenfahrgestells (1) vom Boden abgehoben sind.

15. Transportwagen nach Anspruch 14, dadurch gekennzeichnet, daß das Auktionsfahrgestell (35) einen U-förmigen Rahmen (37) mit einer offenen Seite aufweist, wobei der Transportwagen über die offene Seite auf dem Auktionsfahrgestell positionierbar ist.

16. Transportwagen nach Anspruch 15, dadurch gekennzeichnet, daß die offene Seite eine Längsseite darstellt.

17. Transportwagen nach einem der Ansprüche 14 bis 16, dadurch gekennzeichnet, daß das Auktionsfahrgestell (35) eine Hubvorrichtung umfaßt, die in einer oberen Stellung einen Transportwagen vom Boden abgehoben in einer Position auf dem Auktionsfahrgestell hält und die es in einer unteren Stellung erlaubt, den Transportwagen auf das Auktionsfahrgestell zu bewegen oder von diesem zu entfernen.

## Revendications

1. Chariot de transport pour fleurs, plantes ou analogues, comprenant un châssis (1) avec au moins deux roulettes pivotantes (2), deux parois verticales (3,4) s'étendant sur deux côtés opposés dudit châssis, et une pluralité de plateaux horizontaux (5)qu'on peut introduire et extraire horizontalement par glissement entre les dites parois et qui sont reliés de façon libérable à ces dernières, caractérisé en ce que chaque paroi (3,4) comprend une première partie (6,7;21,22)comportant des éléments d'appui (8,30) pour les plateaux (5), et une deuxième partie (9,10;23,24) qui peut être décalée en hauteur par rapport à ladite première partie.

2. Chariot de transport suivant la revendication 1, caractérisé en ce que la deuxième partie (9, 10) comprend une bordure supérieure mobile (11) de la première partie (6,7), ladite bordure supérieure pouvant être amenée à différentes positions par rapport à ladite première partie au moyen de tiges de guidage (12) qui sont fixées à ladite deuxième partie et qui coulissent dans des logements prévus dans ladite première partie.

3. Chariot de transport suivant la revendication 2, caractérisé en ce que la bordure supérieure mobile (11) peut être bloquée par rapport à la première partie au moyen d'un dispositif de blocage (13) relié aux tiges de guidage et pouvant être fixé à la première partie.

4. Chariot de transport suivant la revendication 1, caractérisé en ce que chaque deuxième partie (23,24) comprend une bordure supérieure indépendante (25) et, reliées à cette dernière, deux bordures latérales indépendantes (26) de la première partie correspondante (21,22), de sorte que les bordures latérales indépendantes peuvent être déplacées dans le plan de la dite première partie et le long de ses côtés longitudinaux correspondants, pour déplacer la deuxième partie par rapport à la première partie.

5. Chariot de transport suivant la revendication 4, caractérisé en ce que chacun des côtés longitudinaux de la première partie (21,22) comporte un certain nombre de logements (27) tandis que les bordures latérales indépendantes (26), qui sont des éléments de la deuxième partie (23,24), comportent des cames qui peuvent s'engager dans les logements désirés respectifs des côtés longitudinaux de la première partie pour maintenir la deuxième partie dans la position désirée par rapport à ladite première partie.

6. Chariot de transport suivant la revendication 5, caractérisé en ce que, au moyen d'un dispositif de manoeuvre (28), tel qu'une poignée ou analogue, on peut amener les cames en prise avec les logements (27) des côtés longitudinaux de la première partie, ou les dégager de ces logements.

7. Chariot de transport suivant la revendication 5 ou 6, caractérisé en ce que chaque bordure latérale indépendante (26) qui est un élément de la dite deuxième partie (23,24) comporte, près de son extrémité inférieure, une tige dirigée vers l'intérieur qui se loge de façon pivotante et translatable dans une rainure (29) prévue dans le côté longitudinal correspondant de la première partie (21,22), tandis que chaque bordure latérale indépendante comporte d'autre part une seule came située à une certaine distance au-dessus de chaque tige.

8. Chariot de transport suivant une des revendications 4 à 7, caractérisé en ce que les bordures latérales indépendantes (26) comportent également des éléments d'appui (31) pour les plateaux (5), la forme des plateaux et des éléments d'appui étant telle que les plateaux qui sont supportés par les éléments d'appui (30) de la première partie (21,22) ne sont pas en contact avec les éléments d'appui (31) des bordures latérales indépendantes (26).

9. Chariot de transport suivant une des revendications 1 à 8, caractérisé en ce que les parois (3,43,44) peuvent être enlevées dudit châssis (1).

10. Chariot de transport suivant une des revendications 1 à 9, caractérisé en ce que les plateaux (5) comportent, à leurs extrémités qui coopèrent avec les parois, des éléments en forme de crochet (15) qui peuvent s'accrocher derrière les éléments d'appui (8) des parois ou des bordures latérales indépendantes.

11. Chariot de transport suivant la revendication 10,caractérisé en ce que chaque plateau comporte, à chacune desdites extrémités, deux éléments distants en forme de crochets (15) qui peuvent s'accrocher derrière des éléments d'appui (8) mutuellement différents.

12. Chariot de transport suivant une des revendications 1 à 11, caractérisé en ce qu'il comprend un dispositif combiné de cheville et crochet de remorquage (17) pour accoupler mutuellement une pluralité de chariots de transport ou accoupler le chariot de transport à un convoyeur à chaîne ou analogue, respectivement.

13. Chariot de transport suivant la revendication 12, caractérisé en ce que, pendant l'application d'un des éléments (18,19) du dispositif à cheville et crochet de remorquage (17), l'autre élément est bloqué.

14. Chariot de transport suivant une des revendications 1 à 13, caractérisé en ce qu'il peut être placé sur un châssis de présentation spécial (35) de sorte que les roulettes (2) du châssis (1) du chariot de transport sont espacées du sol.

15. Chariot de transport suivant la revendication 14, caractérisé en ce que le châssis de présentation (35) comprend un cadre en forme de U (37) ayant un côté ouvert, le chariot de transport pouvant être placé sur le chariot de présentation par ce côté ouvert.

16. Chariot de transport suivant la revendication 15, caractérisé en ce que le côté ouvert constitue un côté longitudinal.

17. Chariot de transport suivant une des revendications 14 à 16, caractérisé en ce que le châssis de présentation (35) comprend un dispositif de levage qui, dans une position supérieure, soulève un chariot de transport placé sur ledit châssis de présentation, par rapport au sol, et qui permet, dans une position inférieure, de placer le chariot de transport sur le châssis de présentation ou de l'enlever de celui-ci.
